# EUROPEAN PATENT SPECIFICATION

(11) **EP 2 530 284 B1**
(45) Date of publication and mention of the grant of the patent: **29.04.2015**
(21) Application number: 12169651.2
(22) Date of filing: 25.05.2012
(51) Int. Cl.: F02D 9/10, G01D 5/20, G01B 7/30

(54) **Motor-driven throttle valve control device having inductance-based noncontact rotation angle detecting device, and rotation angle detecting device used for the same**
Motorbetriebene Drosselventilsteuervorrichtung mit induktanzbasierter kontaktfreier Drehwinkelerkennungsvorrichtung und Drehwinkelerkennungsvorrichtung dafür
Dispositif de commande de vanne papillon motorisée dotée d'un dispositif de détection d'angle de rotation sans contact à inductance et dispositif de détection d'angle de rotation utilisé pour celui-ci

(30) Priority: 30.05.2011 JP 2011119846
(43) Date of publication of application: 05.12.2012
(73) Proprietor: Hitachi Automotive Systems, Ltd., Hitachinaka-shi Ibaraki 312-8503 (JP)
(72) Inventor: NEMOTO, Toyoshi, Ibaraki, 312-8503 (JP); HATSUZAWA, Hidefumi, Ibaraki, 312-8503 (JP)
(74) Representative: MERH-IP Matias Erny Reichl Hoffmann

(56) References cited:
- EP-A1- 2 264 406
- EP-A2- 1 914 520

## Description

### BACKGROUND OF THE INVENTION

### 1. Field of the Invention

The present invention relates a noncontact rotation angle detecting device which detects the rotational position (rotation angle) of a rotating conductor by taking advantage of the phenomenon that the inductance between the rotating conductor (attached to a rotating shaft of a rotating body) and a coil conductor attached to a stator facing the rotating conductor changes according to the positional relationship between the two conductors.

The present invention relates also to a motor-driven throttle valve control device which electrically controls the opening area of an air passage of an internal combustion engine by use of a throttle valve driven by a motor and which is equipped with the above rotation angle detecting device for detecting the rotation angle of the throttle valve.

### 2. Description of the Related Art

A rotation angle detecting device described in JP-2008-96231-A is known as an example of the so-called noncontact rotation angle detecting device that detects the position or rotation angle of a rotating body based on the change in inductance.

In the above rotation angle detecting device, a holder in a cup-like shape is attached to the tip of the object of detection of rotation, a disk made of insulating material is fixed to the end face of the holder, and an excitation conductor is printed on the surface of the disk.

The use of this type of rotation angle detecting device for motor-driven throttle valve control devices is being proposed recently. A similar device with a cup-shaped rotor holder and a metallic rotor holder inserter that is fixed by a press-fit is known from EP 2 264 406 A1.

### SUMMARY OF THE INVENTION

In the above conventional technique, the rotation angle detecting device mainly includes three components: the disk made of insulating material on which the excitation conductor is printed, the holder which holds the excitation conductor (disk), and an inserter made of metal for fixing the holder to the object of detection of rotation (throttle shaft). Further, the disk (made of insulating material and having the excitation conductor printed thereon) and the holder for holding the disk are joined together using an adhesive agent. Thus, a large number of parts and assembling steps are necessary for the production of the rotation angle detecting device.

There has been proposed a technique for simplifying the structure of the rotation angle detecting device. In the technique, the excitation conductor is configured to have a cylindrical press-in part and a planar engaging part formed continuously and integrally in the axial direction of the excitation conductor. Meanwhile, a cylindrical part and a planar part are formed continuously and integrally at the tip of the rotating shaft (throttle shaft). The cylindrical press-in part of the excitation conductor is directly fixed to the cylindrical part at the tip of the rotating shaft while making the planar engaging part of the excitation conductor engage with the planar part of the rotating shaft. In the rotation angle detecting device employing this structure, however, when electrostatic noise is applied to the device from a connector of the gear cover, electric discharge can occur between the excitation conductor and a magnetic field exciting conductor or between the magnetic field exciting conductor and a signal detection conductor, by which the microcomputer of the throttle sensor (rotation angle detecting device) can be broken.

To resolve the above problem a rotation angle detecting device is proposed in accordance with the independent claims. A part made of insulating material is provided at the tip of the object of detection of rotation (throttle shaft) and the excitation conductor is directly attached to the part made of insulating material.

The object of detection of rotation (throttle shaft) may be implemented by a shaft made of insulating material and the excitation conductor may be directly fixed to the shaft made of insulating material.

A housing (throttle body) which supports the object of detection of rotation (throttle shaft) may be made of insulating material and the excitation conductor may be directly fixed to the object of detection of rotation (throttle shaft).

A bearing which supports the object of detection of rotation (throttle shaft) may be formed of a member made of insulating material and the excitation conductor may be directly fixed to the object of detection of rotation (throttle shaft).

An insulating member or an insulating layer may be provided for blocking the channel of discharge current flowing from a power supply connector (attached to a case member (gear cover)) through the magnetic field exciting conductor, the signal detection conductor and the excitation conductor (attached to the object of detection of rotation (throttle shaft)) when static electricity occurs to the power supply connector attached to the case member.

By employing the configurations in accordance with the present invention, a motor-driven throttle valve control device having an inductance-based noncontact rotation angle detecting device, not affected by electrostatic noise and having high reliability, can be realized.

### BRIEF DESCRIPTION OF THE DRAWINGS

Fig. 1 is an enlarged cross-sectional view showing a principal part of an inductance-based noncontact rotation angle detecting device in accordance with a first embodiment of the present invention.
Fig. 2 is a perspective view showing a principal part of the inductance-based noncontact rotation angle detecting device.
Fig. 3 is an exploded perspective view showing a rotating shaft and a conductor pair of the inductance-based noncontact rotation angle detecting device.
Fig. 4 is a cross-sectional view of a motor-driven throttle valve control device which is used for a diesel engine vehicle.
Fig. 5 is an exploded perspective view of a gear cover of the motor-driven throttle valve control device used for a diesel engine vehicle.
Fig. 6 is an external perspective view of the motor-driven throttle valve control device used for a diesel engine vehicle.
Fig. 7 is a perspective view showing the motor-driven throttle valve control device from which the gear cover has been detached.
Fig. 8 is a plan view showing a gear chamber of the motor-driven throttle valve control device used for a diesel engine vehicle.
Fig. 9 is an exploded perspective view of the gear chamber, etc. of the motor-driven throttle valve control device used for a diesel engine vehicle.
Fig. 10 is an enlarged cross-sectional view showing a principal part of a rotation angle detecting device in accordance with a second embodiment of the present invention.
Fig. 11 is an enlarged cross-sectional view showing a principal part of a rotation angle detecting device in accordance with a ninth embodiment of the present invention.
Fig. 12 is a conceptual diagram for explaining a rotation angle detecting device in accordance with a tenth embodiment of the present invention.
Fig. 13 is an enlarged cross-sectional view showing a principal part of a rotation angle detecting device in accordance with a third embodiment of the present invention.
Fig. 14 is an enlarged cross-sectional view showing an example of connection of a resin holder and a throttle shaft via an inserter in the rotation angle detecting device of the third embodiment.
Fig. 15 is an enlarged cross-sectional view showing a principal part of a rotation angle detecting device in accordance with a fourth embodiment of the present invention.
Fig. 16 is an enlarged view showing an example of connection of an excitation conductor and a throttle gear in the rotation angle detecting device of the fourth embodiment.
Fig. 17 is an enlarged cross-sectional view for explaining distances between members in the rotation angle detecting device of the fifth embodiment.

### DESCRIPTION OF THE PREFERRED EMBODIMENTS

Referring now to the drawings, a description will be given in detail of preferred embodiments in accordance with the present invention.

### <First Embodiment>

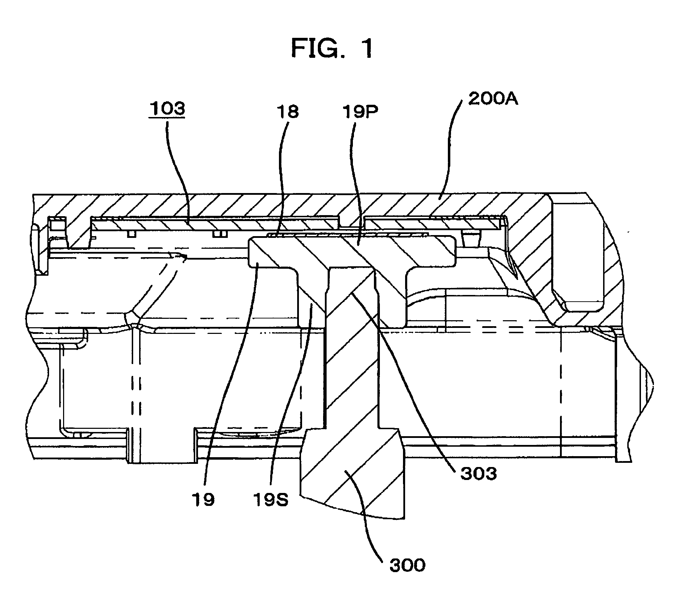

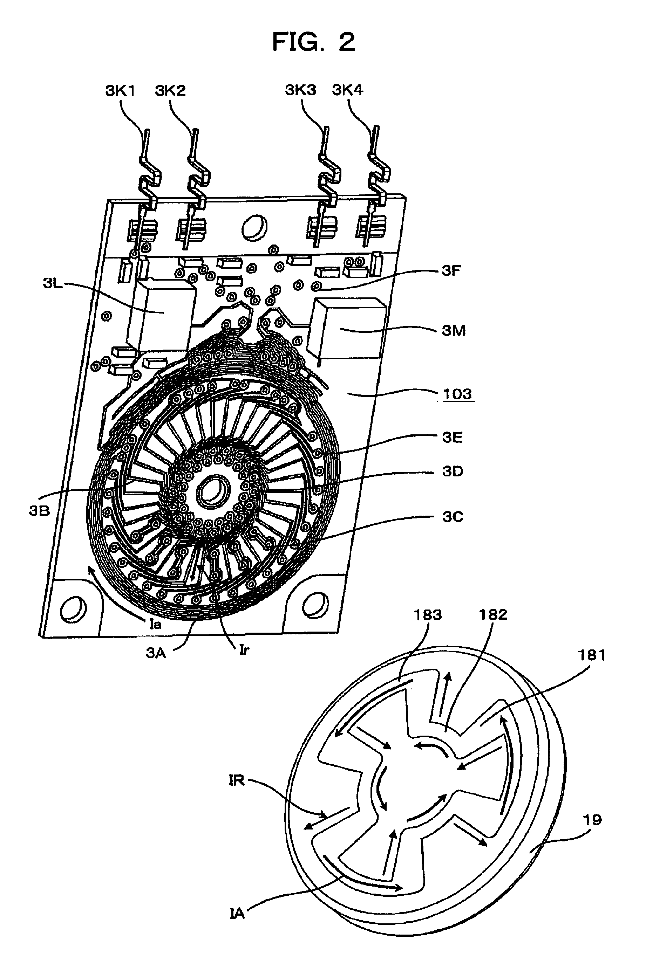

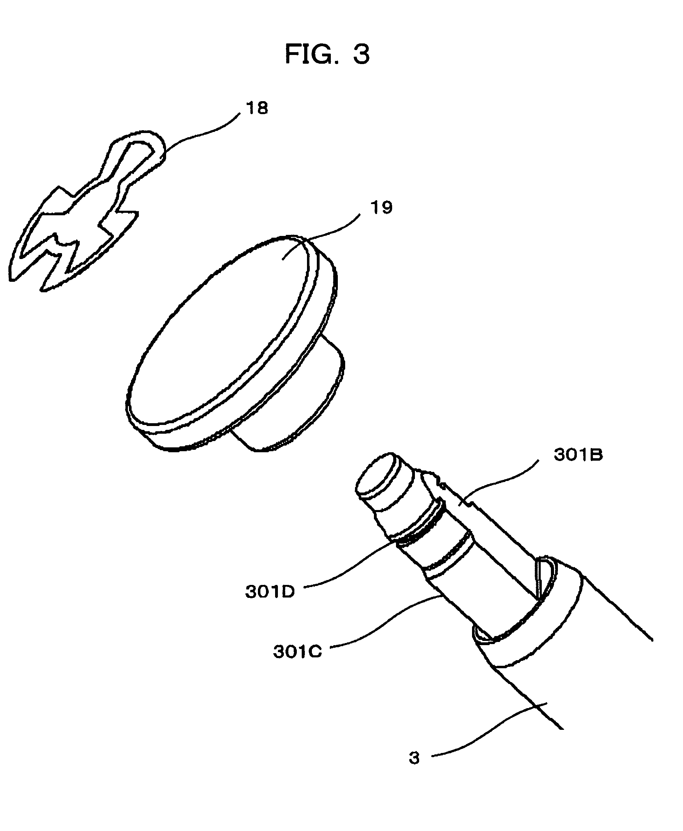

First, an embodiment of a rotation angle detecting device in accordance with the present invention will be described referring to Figs. 1 - 3. Fig. 1 is an enlarged cross-sectional view showing a principal part of an inductance-based noncontact rotation angle detecting device in accordance with a first embodiment of the present invention. Fig. 2 is a perspective view showing a principal part of the rotation angle detecting device. Fig. 3 is an exploded perspective view showing a rotating shaft and a conductor pair of the rotation angle detecting device.

As shown in Figs. 1 and 3, at the tip 303 of a rotating shaft 3 as the object of detection of rotation, a cylindrical part 19S of a resin holder 19 has been formed integrally by plastic molding (resin molding) by using the rotating shaft 3 as an insert member.

At the end of the cylindrical part 19S of the resin holder 19, a disk part 19P has been formed by integral molding. On the surface of the disk part 19P, an excitation conductor 18 (explained later) is formed integrally with the resin holder 19 when the resin holder 19 and the rotating shaft 3 are formed integrally.

The rotating shaft 3 having a groove 301D is located inside of a plastic-molded part of the resin holder 19, by which the resin holder 19 is prevented from dropping off. The rotating shaft 3 is provided with planar parts 301B and 301C, by which the resin holder 19 is prevented from rotating with respect to the rotating shaft 3.

It is also possible, as shown in Fig. 3, to prepare the excitation conductor 18 and the resin holder 19 separately, retrofit the excitation conductor 18 onto the surface of the disk part 19P of the resin holder 19, thereafter apply an adhesive agent to the tip of the rotating shaft 3, and press the resin holder 19 onto the rotating shaft 3. Also in this case, the planar parts 301B and 301C are formed in order to prevent the resin holder 19 from rotating.

As shown in Fig. 2, the excitation conductor 18 is made up of linear parts 181 extending radially, arc-shaped parts 182 formed to connect inner-radius ends of adjacent linear parts 181, and arc-shaped parts 183 formed to connect peripheral ends of adjacent linear parts 181. Six of the linear parts 181 are arranged at 60-degree intervals.

A sensor circuit board 103 is fixed on a sensor case 200A to face the excitation conductor 18 by using an adhesive agent. The top and bottom of the sensor circuit board 103 after being bonded to the sensor case 200A are coated with a coating agent, by which the sensor circuit board 103 is protected from abrasion powder and corrosive gas.

The sensor circuit board 103 is provided with exciting conductors 3A and signal detection conductors 3B as printed wiring.

One end of each electric terminal 3K1 - 3K4 is bonded to the sensor circuit board 103 by brazing or welding. The other end of each electric terminal 3K1 - 3K4 is connected to an electric conductor which has been plastic-molded integrally with the sensor case 200A. Via the electric conductor, each electric terminal 3K1 - 3K4 is connected to a connector (unshown) which has been plastic-molded integrally with the sensor case 200A.

Specifically, four of the magnetic field exciting conductors 3A are printed on an insulating substrate of the sensor circuit board 103 as shown in Fig. 2. Inside the magnetic field exciting conductors 3A, a plurality of signal detection conductors 3B are printed to extend radially. The back of the sensor circuit board 103 is also printed with similar exciting conductors 3A and signal detection conductors 3B. The magnetic field exciting conductors 3A and the signal detection conductors 3B on the two faces of the sensor circuit board 103 are connected with each other by through holes 3C - 3F.

In this embodiment, the sensor circuit board 103 is configured so that three-phase AC (Alternating Current) signals with 120-degree phase differences can be acquired from the signal detection conductors 3B.

Two noncontact rotation angle detecting devices practically identical with each other are formed. Sensor abnormalities are detected by comparing signals from the two rotation angle detecting devices. In case of an abnormality, the two rotation angle detecting devices back up each other.

The reference characters "3L" and "3M" represent microcomputers. Each microcomputer 3L, 3M has functions of executing driving control and signal processing of each noncontact rotation angle detecting device.

Among the four terminals 3K1 - 3K4, one (3K1, for example) functions as a power supply terminal, one (3K3, for example) functions as a ground terminal, and the remaining two (3K2 and 3K4, for example) function as signal output terminals of the two rotation angle detecting devices, respectively. By arranging the ground terminal between the signal terminals, the signals of the two rotation angle detecting devices can be prevented from simultaneously falling into abnormal states due to a short circuit between the signal terminals.

Each microcomputer 3L, 3M supplies electric current from the power supply terminal 3K1 to the magnetic field exciting conductors 3A, detects the rotational position of the excitation conductor 18 by processing the three-phase AC current waveforms occurring in the signal detection conductors 3B, and consequently detects the rotation angle of the rotating shaft 3.

In the following, the operation of the inductance-based noncontact rotation angle detecting device of this embodiment will be described.

The microcomputer 3M can basically be regarded as a component for controlling the conductor pattern sets 3A and 3B (exciting conductors 3A, signal detection conductors 3B) constituting a first rotation angle detecting device formed on the front and back of Fig. 2.

On the other hand, the microcomputer 3L can basically be regarded as a component for controlling the conductor pattern sets 3A and 3B (exciting conductors 3A, signal detection conductors 3B) constituting a second rotation angle detecting device formed on the front or back of Fig. 2. Each computer 3L, 3M supplies DC current Ia from the power supply terminal 3K1 to the magnetic field exciting conductors 3A.

When the DC current Ia flows through the magnetic field exciting conductors 3A, current IA in a direction reverse to the current Ia is induced and excited in the peripheral arc-shaped conductors 183 of the excitation conductor 18 facing the magnetic field exciting conductors 3A. The excited current IA flows throughout the excitation conductor 18 in the directions of the arrows. Current IR flowing through each of the radial-direction conductors 181 induces and excites current Ir in a direction reverse to the current IR in a radial conductor part of a signal detection conductor 3B facing the radial-direction conductor 181. The current Ir is AC current.

By the signal detection conductors 3B (36 on the front, 36 on the back) arranged radially at even intervals, three phase patterns (U, V, W) for the first rotation angle detecting device and three phase patterns (U, V, W) for the second rotation angle detecting device are formed.

When the excitation conductor 18 is at a particular rotational position (e.g., start position (rotation angle = 0)), the AC currents Ir of the U, V and W phases have 120-degree phase differences between each other.

With the rotation of the disk (disk part 19P), a phase shift occurs between the three-phase AC currents. Each microcomputer 3L, 3M detects the phase shift and determines how much the excitation conductor 18 has rotated (rotation angle) based on the phase shift.

The two signal currents of the first and second rotation angle detecting devices, which are inputted from the signal detection conductors 3B to the microcomputers 3L and 3M, basically indicate the same values. The microcomputers 3L and 3M process the same signal currents, respectively, and output signal voltages that are inverse in the gradient and equal in the amount of variation through the signal terminals 3K1-3K4 (3K2 and 3K4, for example). These signals are those proportional to the rotation angle of the disk. An external device receiving the two signals monitors the signals and thereby judges whether the first and second rotation angle detecting devices are operating normally or not. When either of the rotation angle detecting devices exhibits an abnormality, the signal of the remaining detecting device is used as the control signal.

In this embodiment configured as above, the resin holder 19 is formed of insulating material, and thus no electric discharge due to static electricity occurs even when electrostatic noise is applied to the electric terminal of a connector. Since no discharge current flows, the aforementioned problem that the microcomputer of the throttle sensor is broken by electric discharge can be eliminated. Further, high productivity can be achieved since the resin holder 19 is plastic-molded on the rotating shaft 3. Furthermore, compared to a conventional technique in which the excitation conductor is formed on an insulating substrate and thereafter the insulating substrate having the excitation conductor thereon is fixed to a resin holder, this embodiment (directly attaching the excitation conductor to the resin holder by insert molding, welding, bonding, etc.) achieves higher productivity and lower cost even when the resin holder is formed separately and thereafter pressed onto the rotating shaft.

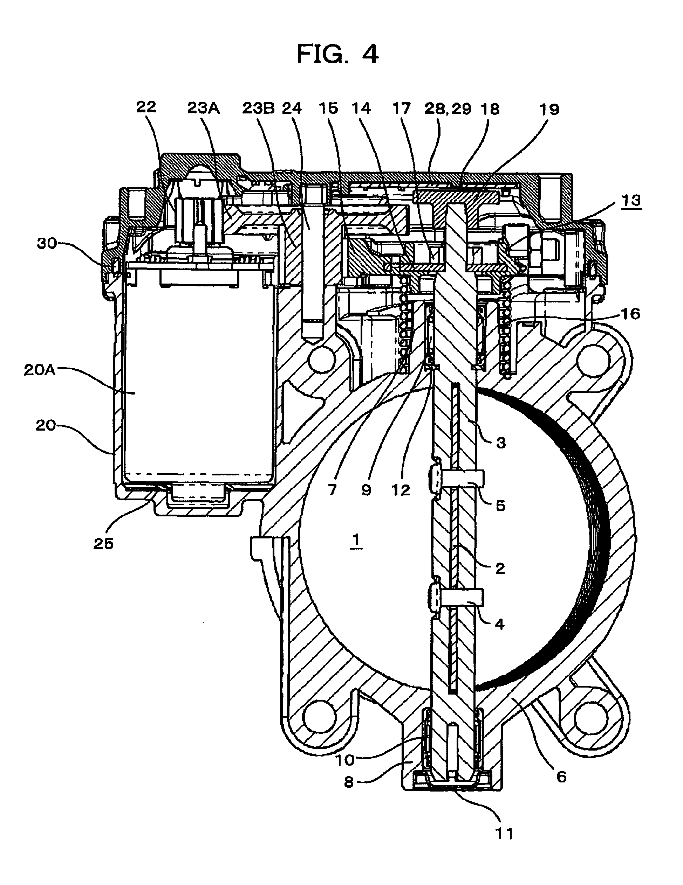

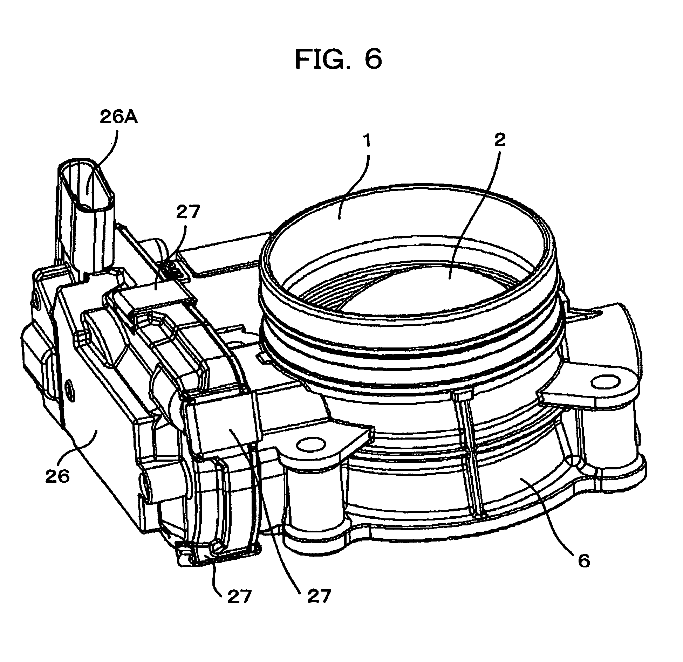

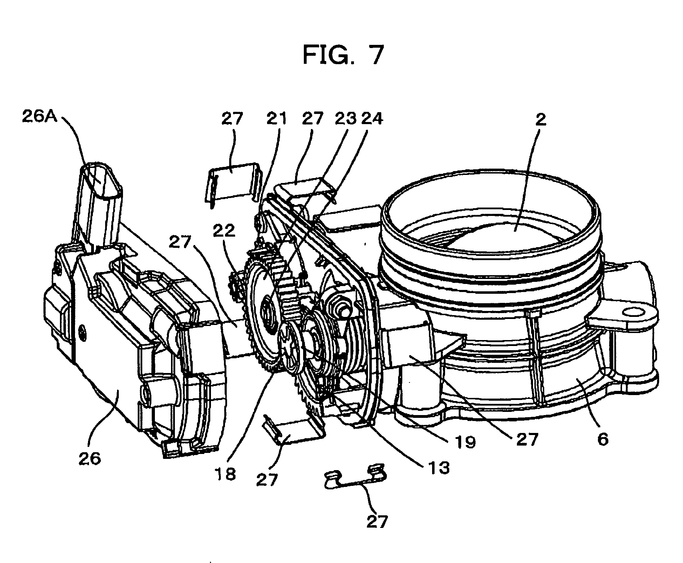

Next, an example of application of the above noncontact rotation angle detecting device to a motor-driven throttle valve control device for a diesel engine will be described concretely with reference to Figs. 4 - 9.

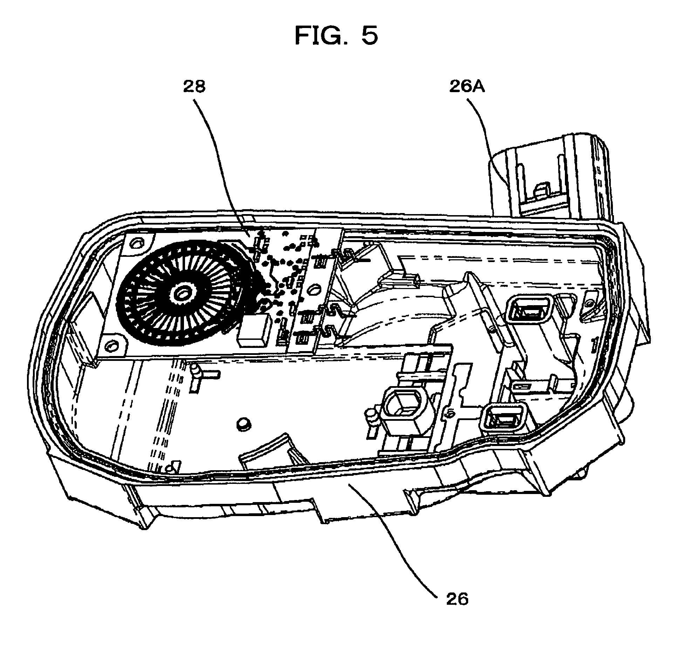

Fig. 4 is a cross-sectional view showing the principal part of the motor-driven throttle valve control device. Figs. 5 - 9 are schematic diagrams for explaining the detailed structure of the motor-driven throttle valve control device.

The configuration of the motor-driven throttle valve control device will be explained below.

An air intake passage 1 (hereinafter referred to as a "bore 1") and a motor housing 20A for storing a motor 20 have been formed together in an aluminum die-cast throttle valve assembly 6 (hereinafter referred to as a "throttle body 6").

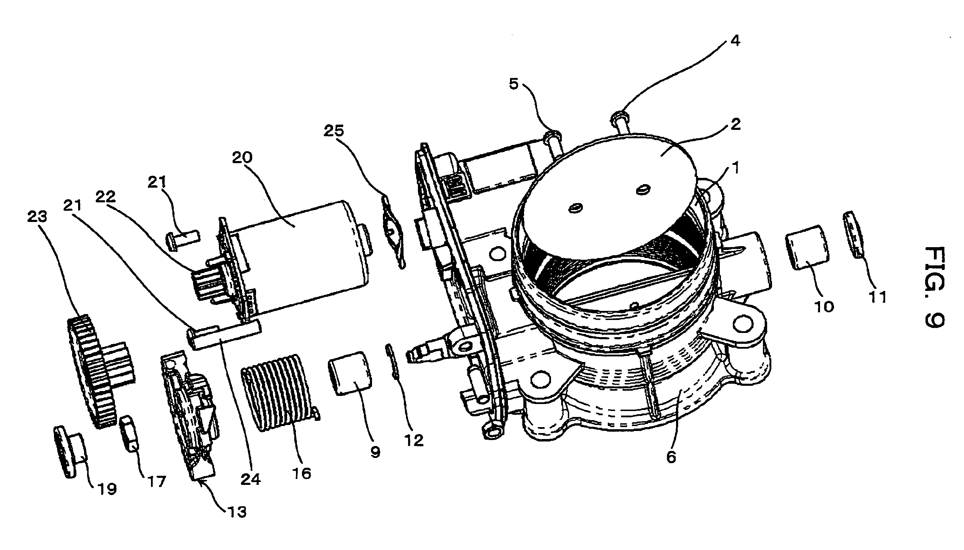

In the throttle body 6, a rotating shaft 3 made of metal (hereinafter referred to as a "throttle shaft 3") is arranged along one diameter line of the bore 1. Both ends of the throttle shaft 3 are rotatably supported by needle bearings 9 and 10. The needle bearings 9 and 10 have been pressed into and fixed to bearing boss parts 7 and 8 of the throttle body 6. As shown in Fig. 9, a C-shaped washer 12 (hereinafter referred to as a "thrust retainer 12") is attached to a slit part at an end of the throttle shaft 3 and thereafter the needle bearing 9 is pressed onto the slit part, by which the movement (movable range) of the throttle shaft 3 in its axial direction is restricted.

As above, the throttle shaft 3 is supported to be rotatable with respect to the throttle body 6. A throttle valve 2 implemented by a metal disk is inserted into a slit formed through the throttle shaft 3 and fixed to the throttle shaft 3 with screws 4 and 5.

With this configuration, the throttle valve 2 rotates according to the rotation of the throttle shaft 3. Consequently, the cross-sectional area of the air intake passage is changed and the flow rate of the intake air supplied to the engine is controlled.

The motor housing 20A is formed substantially in parallel with the throttle shaft 3. The motor 20 (implemented by a brush-type DC motor) is inserted into the motor housing 20A and fixed by screwing a flange part of a bracket 20B of the motor 20 to a side wall 6A of the throttle body 6 with screws 21. A wave washer 25 arranged at an end of the motor 20 holds the motor 20.

Openings of the bearing boss parts 7 and 8 are sealed up with the needle bearings 9 and 10 so as to form a shaft seal part and maintain hermeticity. An end of the throttle shaft 3 where the bearing boss part 8 is arranged is sealed up with a cap 11, by which the end of the throttle shaft 3 and the needle bearing 10 are prevented from being exposed.

With this configuration, leakage of air from the bearing parts and leakage of bearing-lubricating grease to the outside or to a sensor room (explained later) is prevented.

An output gear 22 made of metal and having the smallest number of cogs is fixed to the end of a rotating shaft of the motor 20. A spring mechanism and a reduction gear mechanism for driving and rotating the throttle shaft 3 are arranged together in a lateral part of the throttle body 6 where the output gear 22 is arranged. These mechanisms are covered with a cover 26 made of resin (hereinafter referred to as a "gear cover 26") which is fixed to the lateral part of the throttle body 6. The inductance-based noncontact rotation angle detecting device which has been explained referring to Figs. 1 - 3 (hereinafter referred to as a "throttle sensor") is installed in the space covered with the gear cover 26 (so-called "gear chamber"), detects the rotation angle of the throttle shaft 3, and consequently detects the open angle of the throttle valve 2.

A throttle gear 13 is fixed to an end of the throttle shaft 3 on the gear cover 26 side. The throttle gear 13 is made up of a metal plate 14 and a resin gear part 15 plastic-molded on the metal plate 14. The metal plate 14 has a concave part in a cup-like shape at its center. The concave part has a flange part for the gear molding at its open end. The resin gear part 15 has been molded on the flange part by plastic molding.

The metal plate 14 has a hole at the center of the concave part. A thread groove has been formed around the tip (i.e., the aforementioned end) of the throttle shaft 3. The metal plate 14 is fixed to the throttle shaft 3 by inserting the tip of the throttle shaft 3 into the hole of the concave part of the metal plate 14 and attaching a nut 17 to the threaded part. With this configuration, the metal plate 14 and the resin gear part 15 formed on the metal plate 14 rotate integrally with the throttle shaft 3.

A return spring 16 formed with a helical spring is sandwiched between the back of the throttle gear 13 and the side wall of the throttle body 6.

One end of the return spring 16, surrounding the bearing boss part 7, is fixed to a notch formed on the throttle body 6 so that the end cannot rotate in the rotational direction of the throttle shaft 3. The other end of the return spring 16, surrounding the cup-shaped part of the metal plate 14 of the throttle gear 13, is fixed to a hole formed through the metal plate 14 so that the end cannot rotate in the rotational direction either.

Since this embodiment is about a throttle valve control device for a diesel engine, the initial position of the throttle valve 2 (i.e., open angle position assigned to the throttle valve 2 when the power of the motor 20 is OFF) is the full-open position.

Thus, a preload is given to the return spring 16 in the rotational direction so that the throttle valve 2 stays at the full-open position when the motor 20 is not energized.

An intermediate gear 23, rotatably supported by a metal gear shaft 24 pressed into and fixed on the side face of the throttle body 6, is arranged between and engaged with the output gear 22 attached to the rotating shaft of the motor 20 and the throttle gear 13 fixed to the throttle shaft 3. The intermediate gear 23 is made up of a large-diameter gear 23A for engaging with the output gear 22 and a small-diameter gear 23B for engaging with the throttle gear 13. The large-diameter gear 23A and the small-diameter gear 23B are formed integrally by plastic molding. These gears 22, 23A, 23B and 15 form a two-stage reducing gear mechanism.

Thus, the rotation of the motor 20 is transmitted to the throttle shaft 3 via the reducing gear mechanism.

The reducing gear mechanism and the spring mechanism are covered by the gear cover 26 made of resin. A groove for a sealing member 30 to be inserted therein is formed on the rim of the open end of the gear cover 26. When the gear cover 26 with the sealing member 30 attached to the groove is put on the throttle body 6, the sealing member 30 adheres closely to the end face of a frame surrounding the gear chamber formed on the side face of the throttle body 6 and thereby shields the gear chamber from the outside air. In this state, the gear cover 26 is fixed to the throttle body 6 using six clips 27.

The rotation angle detecting device (i.e., throttle sensor), formed between the reducing gear mechanism configured as above and the gear cover 26 covering the reducing gear mechanism, will be explained more specifically below.

The resin holder 19 is fixed to the end of the throttle shaft 3 on the gear cover's side by integral molding. The excitation conductor 18 formed by press work is attached to the plain part at the end of the resin holder 19 by integral molding.

Thus, when the throttle valve 2 rotates according to the rotation of the motor 20, the excitation conductor 18 also rotates integrally.

A magnetic field exciting conductor 28 and a signal detection conductor 29 of the throttle sensor are fixed on the gear cover 26 at positions facing the excitation conductor 18.

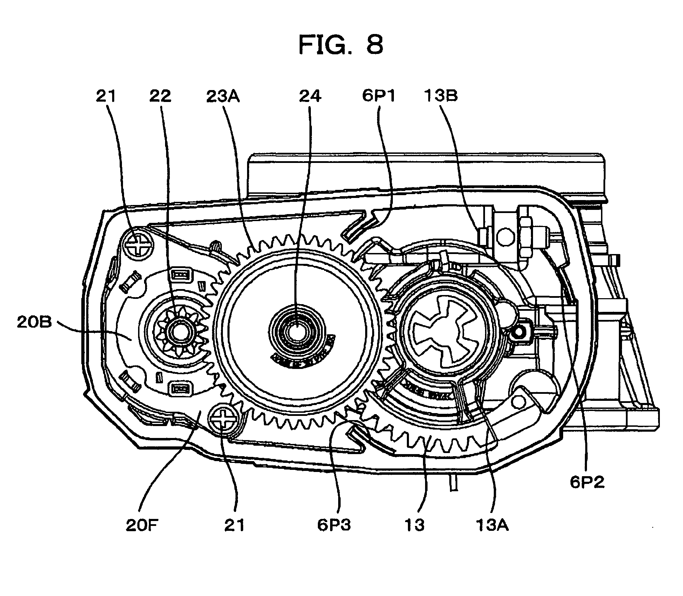

Fig. 8 is a plan view of the gear chamber. The gear chamber is partitioned by the frame to which the gear cover 26 is fixed. Inside the frame, six fixation parts used for fixing the gear cover 26 with the clips can be seen. The reference characters "6P1" - "6P3" represent walls for positioning the gear cover 26. Positioning bosses of the gear cover 26 engage with the three walls 6P1 - 6P3, by which the magnetic field exciting conductor 28 and the signal detection conductor 29 are positioned precisely with respect to the conductor on the rotating side and allowed to output signals within a requested permissible range. A full-open stopper 13A, as a part for mechanically setting the initial position (i.e., the full-open position) of the throttle gear 13, is implemented by a protrusion formed integrally with the side wall of the throttle body 6.

An end of a notch of the throttle gear 13 makes contact with the protrusion (full-open stopper 13A), by which the throttle shaft 3 is prohibited from rotating across the full-open position.

A fully-closed stopper 13B is a part for regulating the fully-closed position of the throttle shaft 3. When the throttle shaft 3 reaches the fully-closed position, the other end of the throttle gear 13 collides with the fully-closed stopper 13B, by which the throttle shaft 3 is stopped from rotating across the fully-closed position. With this configuration, the maximum value of the rotational position (position in the rotational direction) of the conductor on the rotating side (excitation conductor 18) fixed to the end of the throttle shaft 3 is set.

Output values of the signal detection conductor (corresponding to those indicated with the reference character "3B" in Fig. 2) when the throttle shaft 3 is at the stopper positions represent a fully-closed value and a full-open value. The reference character "20B" represents a motor bracket and "20F" represents a flange part of the motor bracket 20B.

Incidentally, if the excitation conductor 18 is electrically coupled with the throttle shaft 3, static electricity applied to an electric terminal of a connector 26A of the gear cover 26 can cause electric discharge between the excitation conductor 18 and the magnetic field exciting conductor 28 or between the excitation conductor 18 and the signal detection conductor 29, by which the microcomputer of the throttle sensor can be broken.

In this embodiment designed to resolve the above problem, the resin holder 19 is arranged between the excitation conductor 18 and the throttle shaft 3. With this configuration, the excitation conductor 18 and the throttle shaft 3 are insulated from each other and the above problem is resolved.

Further, by forming the resin holder 19 together with the throttle shaft 3 and the excitation conductor 18 by integral molding, a small-sized and low-priced electronic control throttle body can be provided.

The height of the excitation conductor 18 can be adjusted by forming the resin holder 19 by the integral molding after the throttle shaft 3 has been attached to the throttle body 6. This enables precise adjustment of the small clearances between the excitation conductor 18 and the magnetic field exciting conductor 28 and between the excitation conductor 18 and the signal detection conductor 29, by which a high-precision noncontact rotation angle detecting device can be realized.

The attaching of the excitation conductor 18 to the resin holder 19 may be conducted by any one of the following methods:
1) Integrally molding a press-worked excitation conductor and the resin holder by means of insert molding.
2) Welding a press-worked excitation conductor to the resin holder.
3) Printing the excitation conductor on the resin holder.
4) Forming the excitation conductor on a printed circuit board and thereafter bonding the printed circuit board to the resin holder.

In the case where the excitation conductor is welded to the resin holder, the welding may be conducted by any method selected from thermal welding, vibration welding and laser welding.

In this embodiment configured as above, the resin holder 19 is formed of insulating material, and thus no electric discharge due to static electricity occurs even when electrostatic noise is applied to an electric terminal of the connector 26A of the gear cover 26. Since no discharge current flows, the problem that the microcomputer of the throttle sensor is broken by electric discharge can be eliminated. Further, high productivity can be achieved since the resin holder is plastic-molded on the rotating shaft. Furthermore, compared to the conventional technique in which the excitation conductor is formed on an insulating substrate and thereafter the insulating substrate having the excitation conductor thereon is fixed to a resin holder, this embodiment (directly attaching the excitation conductor to the resin holder by insert molding, welding, bonding, etc.) achieves higher productivity and lower cost even when the resin holder is formed separately and thereafter pressed onto the rotating shaft.

### <Second Embodiment>

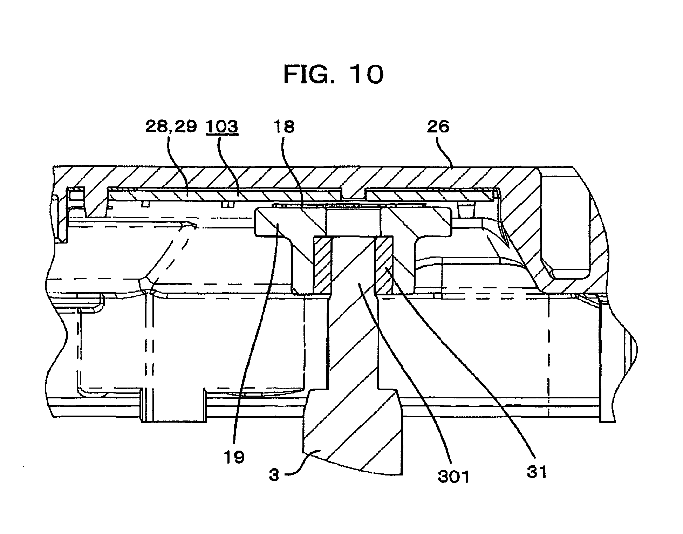

Fig. 10 shows a rotation angle detecting device in accordance with a second embodiment of the present invention. This embodiment differs from the first embodiment in that the joining of the resin holder 19 and the throttle shaft 3 is conducted via an inserter 31 made of metal.

The resin holder 19 and the inserter 31 have previously been formed integrally. After the throttle shaft 3 has been attached to the throttle body 6, the inserter 31 and the throttle shaft 3 are set in a press-fitting relationship, by which the resin holder 19 is fixed with respect to the throttle shaft 3. A high-precision noncontact rotation angle detecting device can be obtained by adjusting the height of the excitation conductor 18 during the press fitting operation.

### <Third Embodiment>

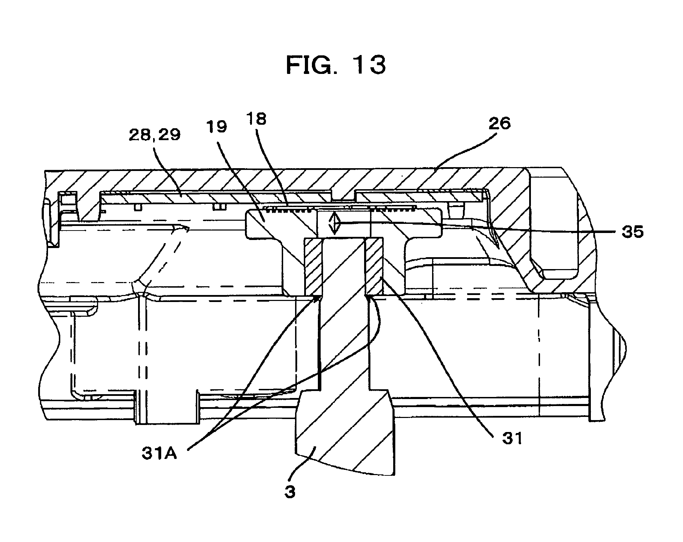

Fig. 13 shows a rotation angle detecting device in accordance with a third embodiment of the present invention. This embodiment differs from the second embodiment in that the electrical path from the excitation conductor 18 to the throttle shaft 3 is eliminated by setting the distance 35 between the excitation conductor 18 (arranged on the resin holder 19) and the throttle shaft 3 at 2 mm or longer. With this configuration, no induced current flows through the excitation conductor 18 even when electrostatic noise from outside flows into the magnetic field exciting conductor 28. Consequently, the breakage of the microcomputer caused by the occurrence of electric discharge between the excitation conductor 18 and the magnetic field exciting conductor 28 or between the excitation conductor 18 and the signal detection conductor 29 can be prevented.

The excitation conductor 18 may be formed by press work, directly printed on the resin holder 19, or formed on a printed circuit board.

The excitation conductor 18 and the resin holder 19 may be fixed together by integral molding, or the excitation conductor 18 may be fixed to the resin holder 19 by thermal welding, vibration welding, laser welding, etc.

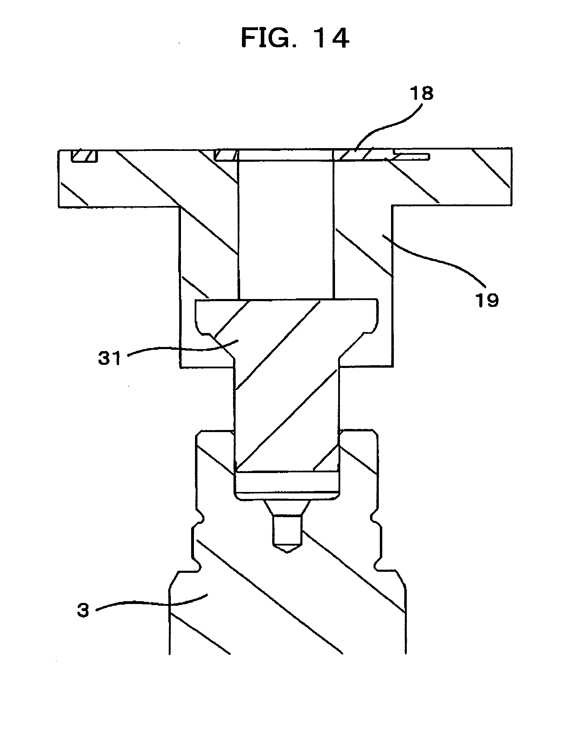

The resin holder 19 and the inserter 31 have been fixed together by integral molding. The inserter 31 and the throttle shaft 3 are fixed together by pressing the throttle shaft 3 into the inserter 31, or by welding. Alternatively, as shown in Fig. 14, the inserter 31 may be formed like a pin with a structure for preventing it from coming off from the resin holder 19 and fixed to the throttle shaft 3 by directly pressing it into the throttle shaft 3 or by welding.

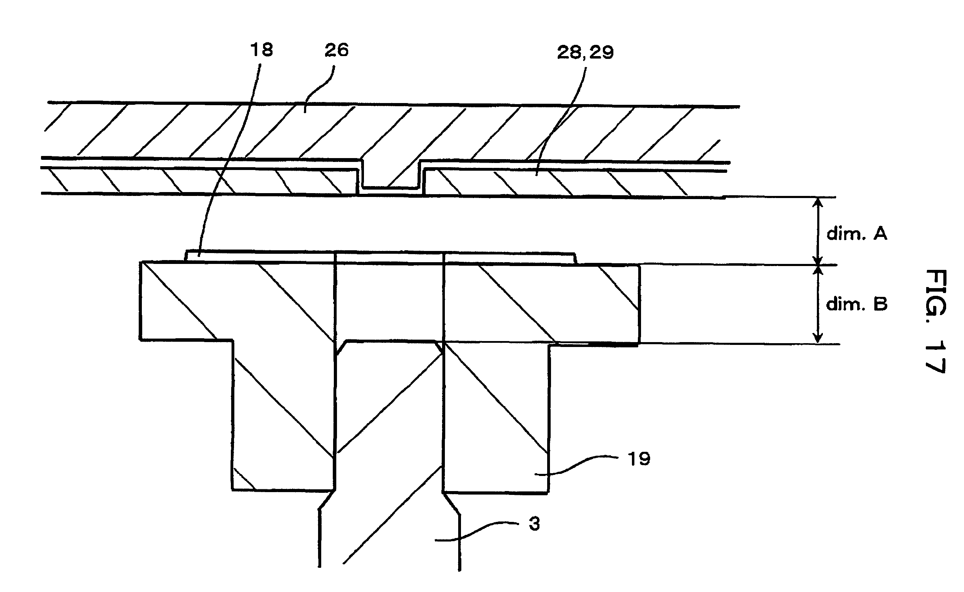

Table 1 shows the result of an experiment conducted for checking whether output voltages (TPS GND, TPS Vref, TPS OUT) of the signal detection conductor 29 indicate normal values when voltage is applied to the magnetic field exciting conductor 28. As experimental conditions, the distance between the magnetic field exciting conductor 28 and the excitation conductor 18 (dim. A shown in Fig. 17) was fixed at 1.2 mm and the distance between the excitation conductor 18 and the throttle shaft 3 (dim. B shown in Fig. 17) was changed. As a result, as long as dim. B was set at 2 mm or longer, the output voltages of the signal detection conductor 29 remained within normal ranges even when a voltage of 28 kV was applied to the magnetic field exciting conductor 28.

### [Table 1]

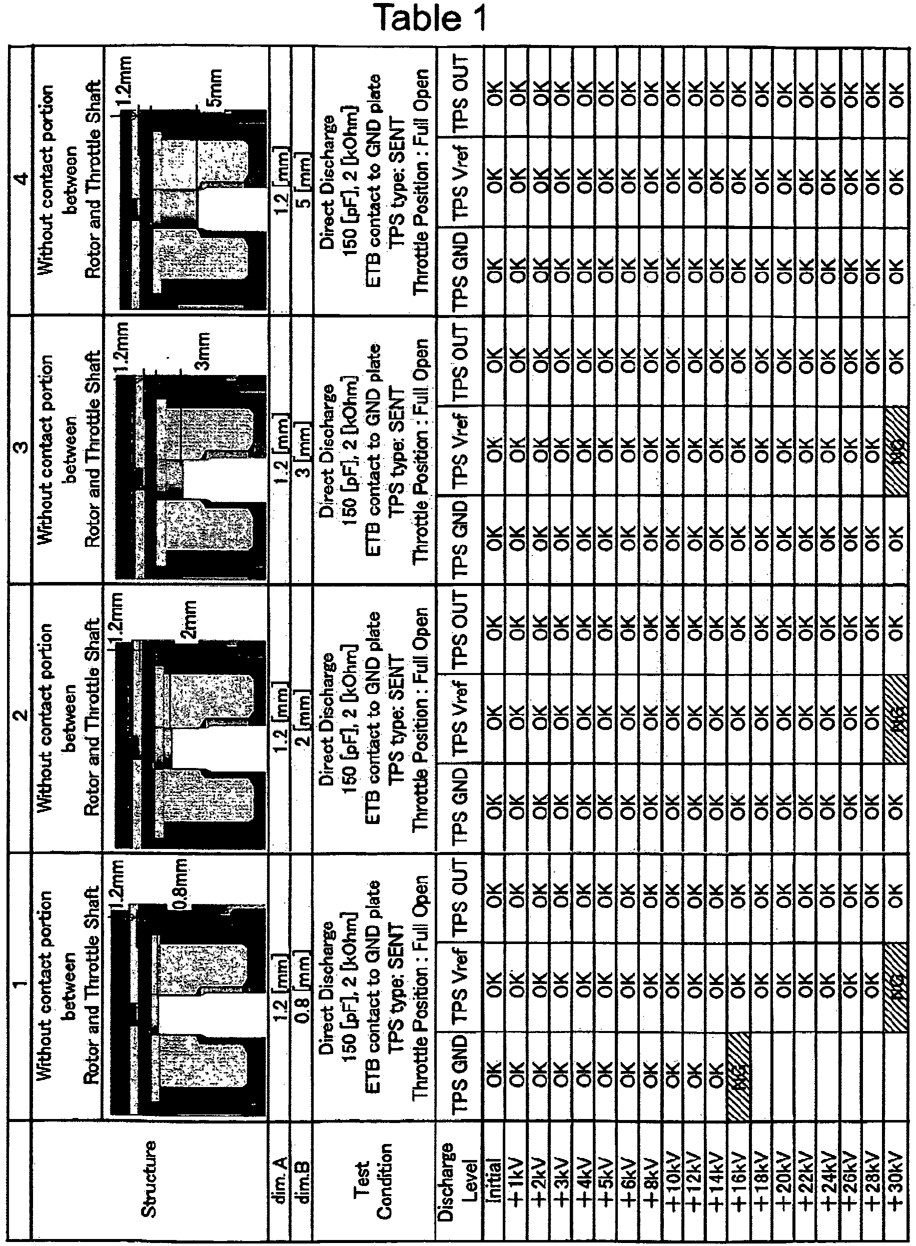

### <Fourth Embodiment>

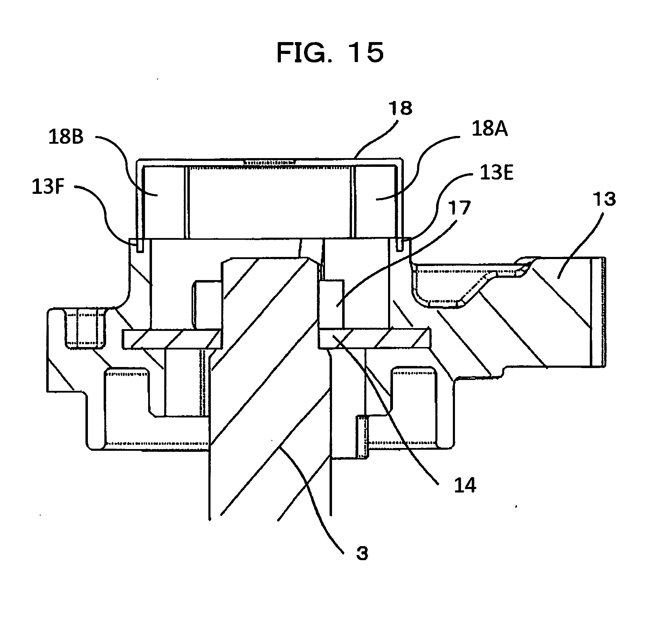

Fig. 15 is an enlarged cross-sectional view showing a principal part of a rotation angle detecting device in accordance with a fourth embodiment of the present invention. In this embodiment, the excitation conductor 18 is arranged at a resin part of the throttle gear 13.

The excitation conductor 18 is formed by press work to have a protruding part for being joined to the throttle gear 13.

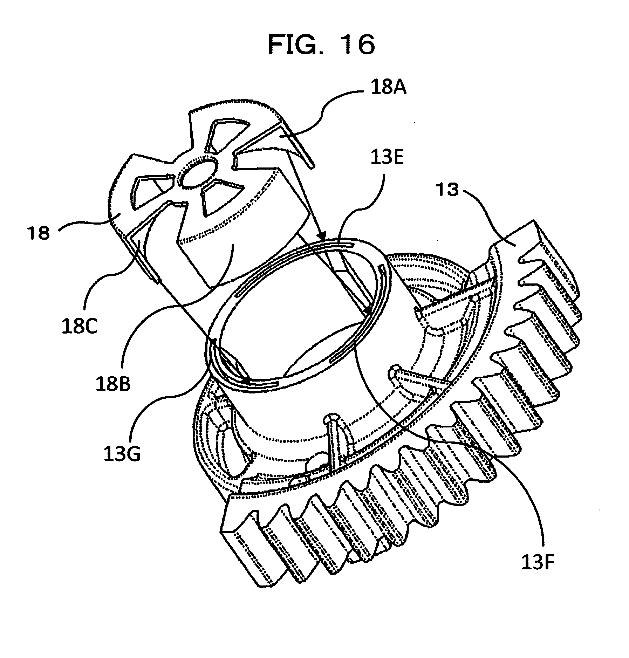

The excitation conductor 18 may be joined to a resin-made throttle gear 13 by plastic molding. It is also possible as shown in Fig. 16 to provide the throttle gear 13 with positioning holes 13E - 13G, insert arms 18A - 18C of the excitation conductor 18 (formed by press work) into the positioning holes 13E - 13G, and join the excitation conductor 18 and the throttle gear 13 together by thermal welding, vibration welding, laser welding, etc.

The metal plate 14 has a hole at its center similarly to the example shown in Fig. 4. A thread groove has been formed around the tip of the throttle shaft 3. The metal plate 14 is fixed to the throttle shaft 3 by inserting the tip of the throttle shaft 3 into the hole of the metal plate 14 and attaching a nut 17 to the threaded part of the throttle shaft 3. With this configuration, the metal plate 14 and the resin gear part 15 formed on the metal plate 14 rotate integrally with the throttle

### <Fifth Embodiment>

In a fifth embodiment, the electrical path from the throttle shaft 3 to an external member to which the throttle body 6 is attached is eliminated in the example of Fig. 4 by changing the material of the throttle body 6 to resin or ceramic. With this configuration, no induced current flows through the excitation conductor 18 even when electrostatic noise from outside flows into the magnetic field exciting conductor 28. Consequently, the breakage of the microcomputer caused by the occurrence of electric discharge between the excitation conductor 18 and the signal detection conductor 29 can be prevented.

### <Sixth Embodiment>

In a sixth embodiment, the electrical path from the excitation conductor 18 to the throttle body 6 is eliminated in the example of Fig. 4 by coating the throttle shaft 3 with resin or ceramic. With this configuration, no induced current flows through the excitation conductor 18 even when electrostatic noise from outside flows into the magnetic field exciting conductor 28. Consequently, the breakage of the microcomputer caused by the occurrence of electric discharge between the excitation conductor 18 and the signal detection conductor 29 can be prevented.

### <Seventh Embodiment>

In a seventh embodiment, the electrical path from the excitation conductor 18 to the throttle body 6 is eliminated in the example of Fig. 4 by coating parts of the throttle shaft 3 (parts contacting the needle bearings 9 and 10 and the thrust retainer 12) with resin or ceramic. With this configuration, no induced current flows through the excitation conductor 18 even when electrostatic noise from outside flows into the magnetic field exciting conductor 28. Consequently, the breakage of the microcomputer caused by the occurrence of electric discharge between the excitation conductor 18 and the signal detection conductor 29 can be prevented.

### <Eighth Embodiment>

In an eighth embodiment, the electrical path from the throttle shaft 3 to the throttle body 6 is eliminated in the example of Fig. 4 by coating the needle bearings 9 and 10 and the thrust retainer 12 with resin or ceramic. With this configuration, no induced current flows through the excitation conductor 18 even when electrostatic noise from outside flows into the magnetic field exciting conductor 28. Consequently, the breakage of the microcomputer caused by the occurrence of electric discharge between the excitation conductor 18 and the signal detection conductor 29 can be prevented. Further, the thrust retainer 12, having the function of regulating the position of the throttle shaft 3 in the thrust direction, can be left out by using ball bearings for the needle bearings 9 and 10.

### <Ninth Embodiment>

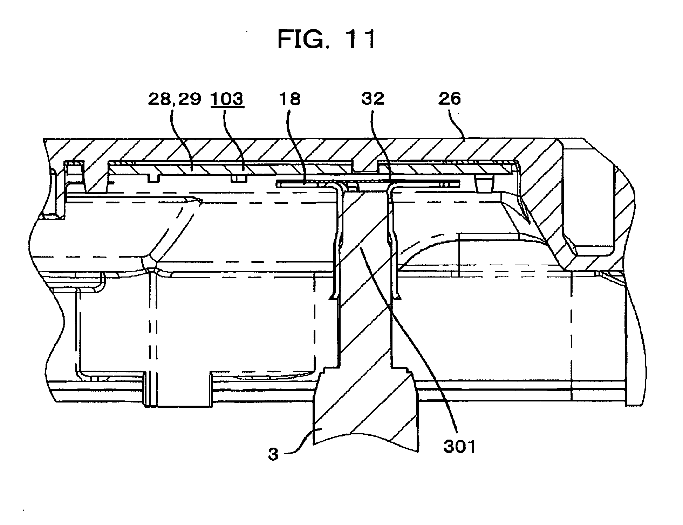

Fig. 11 is an enlarged cross-sectional view showing a principal part of a rotation angle detecting device in accordance with a ninth embodiment of the present invention. In this embodiment, an insulator 32 is arranged between the excitation conductor 18 and the magnetic field exciting conductor 28 and signal detection conductor 29.

By insulating the excitation conductor 18 from the magnetic field exciting conductor 28 and the signal detection conductor 29 by arranging the insulator 32, the breakage of the microcomputer caused by the occurrence of electric discharge between the excitation conductor 18 and the magnetic field exciting conductor 28 or between the excitation conductor 18 and the signal detection conductor 29 due to electrostatic noise can be prevented.

### <Tenth Embodiment>

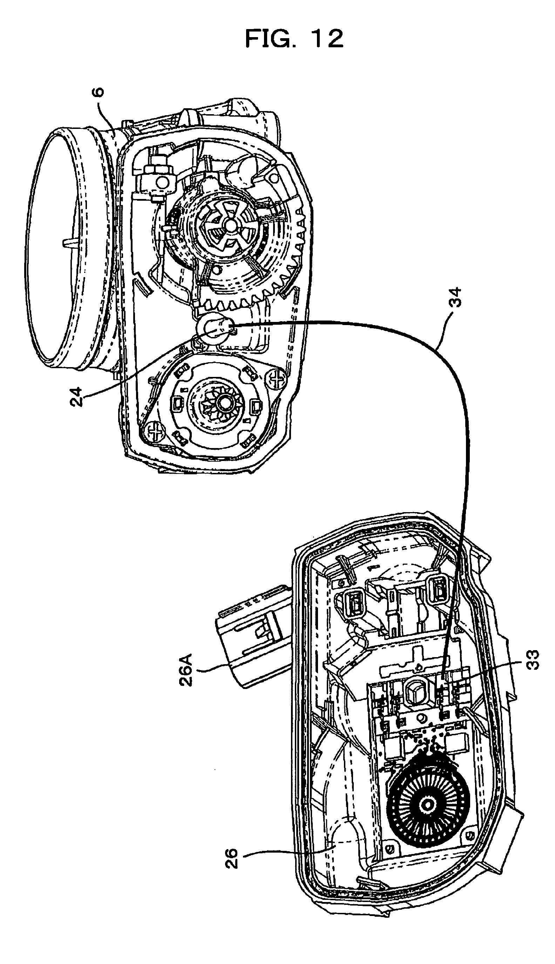

Fig. 12 is a conceptual diagram for explaining a rotation angle detecting device in accordance with a tenth embodiment of the present invention. In this embodiment, the ground terminal 33 of the gear cover 26 and the gear shaft 24 are connected with each other with a conductor 34. The conductor 34 may either be a lead (conducting wire) or a different metallic conductor such as a spring. It is also possible to embed a member having capacitance (e.g., capacitor) in the conductor.

By employing the above structure, even when electrostatic noise is applied to a connector part of the gear cover 26, the formation of an electric current path from the ground terminal 33 to the throttle body 6 via the conductor 34 and the gear shaft 24 can be prevented. No electric discharge is caused between the excitation conductor 18 and the magnetic field exciting conductor 28 or between the excitation conductor 18 and the signal detection conductor 29 by the electrostatic noise. Consequently, the breakage of the microcomputer can be prevented.

Various modes can be summarized as follows:

### Mode 1

The rotation angle detecting device according to aspect 13, wherein the resin holder is fixed to a rotating shaft of a rotating body by means of press fitting.

### Mode 2

The rotation angle detecting device according to mode 1, wherein a metallic member for allowing the resin holder to satisfy a press-fitting relationship with the rotating shaft of the rotating body is formed integrally with the resin holder.

### Mode 3

The rotation angle detecting device according to aspect 13, wherein the resin holder is joined to a rotating shaft of a rotating body by vibration welding.

### Mode 4

The rotation angle detecting device according to aspect 13, wherein the resin holder is joined to a rotating shaft of a rotating body by welding.

### Mode 5

The rotation angle detecting device according to aspect 13, wherein the resin holder is joined to a rotating shaft of a rotating body with screws.

### Mode 6

The rotation angle detecting device according to aspect 9, wherein the excitation conductor part is arranged on a driving force transmission gear which rotates integrally with a rotating shaft of a rotating body.

### Mode 7

The rotation angle detecting device according to mode 6, wherein the excitation conductor part is formed by press work.

### Mode 8

The rotation angle detecting device according to mode 7, wherein the excitation conductor part is formed integrally with the driving force transmission gear.

### Mode 9

The rotation angle detecting device according to mode 7, wherein the excitation conductor part is attached to the driving force transmission gear by thermal welding.

### Mode 10

The rotation angle detecting device according to mode 7, wherein the excitation conductor part is attached to the driving force transmission gear by vibration welding.

### Mode 11

The rotation angle detecting device according to mode 7, wherein the excitation conductor part is formed by press work and attached to the driving force transmission gear by laser welding.

### Mode 12

The rotation angle detecting device according to aspect 9, wherein:
the excitation conductor part is arranged to rotate integrally with a rotating shaft of a rotating body, and
the rotating shaft is attached to a housing formed of resin or ceramic.

### Mode 13

The rotation angle detecting device according to aspect 9, wherein:
the excitation conductor part is arranged to rotate integrally with a rotating shaft of a rotating body, and
the rotating shaft is attached to a housing, and
part of the housing is formed of resin or ceramic so as to eliminate an electrical path between the power supply connector of the magnetic field exciting conductor part and an external member to which the rotation angle detecting device is attached.

### Mode 14

The rotation angle detecting device according to aspect 9, wherein:
the excitation conductor part is arranged to rotate integrally with a rotating shaft of a rotating body, and
the rotating shaft is formed of resin or ceramic. Mode 15

The rotation angle detecting device according to aspect 9, wherein:
the excitation conductor part is arranged to rotate integrally with a rotating shaft of a rotating body, and
part of the rotating shaft is formed of resin or ceramic.

### Mode 16

The rotation angle detecting device according to aspect 9, wherein:
the excitation conductor part is arranged to rotate integrally with a rotating shaft of a rotating body, and
the rotating shaft is attached to a housing part via a bearing part.

### Mode 17

The rotation angle detecting device according to mode 16, wherein the bearing part is formed of resin or ceramic.

### Mode 18

The rotation angle detecting device according to mode 16, wherein part of the bearing part is formed of resin or ceramic.

### Mode 19

The rotation angle detecting device according to aspect 9, wherein an insulating layer for preventing electric discharge is formed between the excitation conductor part and the magnetic field exciting conductor part.

### Mode 20

The rotation angle detecting device according to mode 19, wherein the insulating layer is arranged on the excitation conductor part.

### Mode 21

A rotation angle detecting device comprising:
a case member which covers an object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor (coil) part to be not in contact with the magnetic field exciting conductor part, the excitation conductor part generating electric current corresponding to the rotational position of the object of detection of rotation by electromagnetic effect; and
a reception conductor part which is arranged on the case member and in which electric current corresponding to the electric current flowing through the excitation conductor part occurs,
wherein a ground line of a power supply connector of the magnetic field exciting conductor part is electrically connected to a member outside the rotation angle detecting device.

### Mode 22

A rotation angle detecting device comprising:
a case member which covers an object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor (coil) part to be not in contact with the magnetic field exciting conductor part, the excitation conductor part generating electric current corresponding to the rotational position of the object of detection of rotation by electromagnetic effect; and
a reception conductor part which is arranged on the case member and in which electric current corresponding to the electric current flowing through the excitation conductor part occurs,
wherein the excitation conductor part is arranged on a resin part which is formed integrally with a rotating shaft of a rotating body.

### Mode 23

The rotation angle detecting device according to mode 22, wherein the excitation conductor part is formed by press work and formed integrally with the resin part which is formed integrally with the rotating shaft.

### Mode 24

The rotation angle detecting device according to mode 22, wherein the excitation conductor part is formed by means of printing on the resin part which is formed integrally with the rotating shaft.

### Mode 25

A rotation angle detecting device comprising:
a case member which covers an object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor (coil) part to be not in contact with the magnetic field exciting conductor part, the excitation conductor part generating electric current corresponding to the rotational position of the object of detection of rotation by electromagnetic effect; and
a reception conductor part which is arranged on the case member and in which electric current corresponding to the electric current flowing through the excitation conductor part occurs, wherein:
   the excitation conductor part is arranged on a holder made of resin, and
   the resin holder is joined to a rotating shaft of a rotating body by vibration welding.

### Mode 26

The rotation angle detecting device according to mode 25, wherein the excitation conductor part is formed by press work and formed integrally with the resin holder.

### Mode 27

The rotation angle detecting device according to mode 25, wherein the excitation conductor part is formed by means of printing on the resin holder.

### Mode 28

A rotation angle detecting device comprising:
a case member which covers an object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor (coil) part to be not in contact with the magnetic field exciting conductor part, the excitation conductor part generating electric current corresponding to the rotational position of the object of detection of rotation by electromagnetic effect; and
a reception conductor part which is arranged on the case member and in which electric current corresponding to the electric current flowing through the excitation conductor part occurs, wherein:
   the excitation conductor part is arranged on a holder made of resin, and
   the resin holder is joined to a rotating shaft of a rotating body based on a press-fitting relationship.

### Mode 29

The rotation angle detecting device according to mode 28, wherein a metallic member for allowing the resin holder to satisfy the press-fitting relationship with the rotating shaft of the rotating body is formed integrally with the resin holder.

### Mode 30

The rotation angle detecting device according to mode 28, wherein the excitation conductor part is formed by press work and formed integrally with the resin holder.

### Mode 31

The rotation angle detecting device according to mode 28, wherein the excitation conductor part is formed by means of printing on the resin holder.

### Mode 32

A rotation angle detecting device comprising:
a case member which covers an object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor (coil) part to be not in contact with the magnetic field exciting conductor part, the excitation conductor part generating electric current corresponding to the rotational position of the object of detection of rotation by electromagnetic effect; and
a reception conductor part which is arranged on the case member and in which electric current corresponding to the electric current flowing through the excitation conductor part occurs, wherein:
   the excitation conductor part is arranged on a holder made of resin, and
   the resin holder is fixed so as to rotate integrally with a rotating shaft of a rotating body, and
   the excitation conductor part and an electric conductor joined to the rotating shaft of the rotating body are arranged to be 2 mm or more apart from each other.

### Mode 33

The rotation angle detecting device according to mode 32, wherein the excitation conductor part is formed by press work.

### Mode 34

The rotation angle detecting device according to mode 33, wherein the excitation conductor part is formed integrally with the resin holder.

### Mode 35

The rotation angle detecting device according to mode 33, wherein the excitation conductor part is welded to the resin holder.

### Mode 36

The rotation angle detecting device according to mode 32, wherein the excitation conductor part is formed by means of printing on the resin holder.

### Mode 37

The rotation angle detecting device according to mode 32, wherein the excitation conductor part is formed on a printed circuit board.

### Mode 38

The rotation angle detecting device according to mode 37, wherein the excitation conductor part is formed integrally with the resin holder.

### Mode 39

The rotation angle detecting device according to mode 37, wherein the excitation conductor part is welded to the resin holder.

### Mode 40

The rotation angle detecting device according to mode 32, wherein the resin holder is fixed to the rotating shaft of the rotating body by means of press fitting.

### Mode 41

The rotation angle detecting device according to mode 40, wherein a metallic member for allowing the resin holder to satisfy a press-fitting relationship with the rotating shaft of the rotating body is formed integrally with the resin holder.

### Mode 42

The rotation angle detecting device according to mode 32, wherein the resin holder is joined to the rotating shaft of the rotating body by vibration welding.

### Mode 43

The rotation angle detecting device according to mode 32, wherein the resin holder is joined to the rotating shaft of the rotating body by welding.

### Mode 44

The rotation angle detecting device according to mode 32, wherein the resin holder is joined to the rotating shaft of the rotating body with screws.

### Mode 45

A rotation angle detecting device comprising:
a case member which covers an object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor (coil) part to be not in contact with the magnetic field exciting conductor part, the excitation conductor part generating electric current corresponding to the rotational position of the object of detection of rotation by electromagnetic effect; and
a reception conductor part which is arranged on the case member and in which electric current corresponding to the electric current flowing through the excitation conductor part occurs,
wherein the excitation conductor part is arranged on a driving force transmission gear which rotates integrally with a rotating shaft of a rotating body.

### Mode 46

The rotation angle detecting device according to mode 45, wherein the excitation conductor part is formed by press work.

### Mode 47

The rotation angle detecting device according to mode 46, wherein the excitation conductor part is formed integrally with the driving force transmission gear.

### Mode 48

The rotation angle detecting device according to mode 46, wherein the excitation conductor part is attached to the driving force transmission gear by thermal welding.

### Mode 49

The rotation angle detecting device according to mode 46, wherein the excitation conductor part is attached to the driving force transmission gear by vibration welding.

### Mode 50

The rotation angle detecting device according to mode 46, wherein the excitation conductor part is formed by press work and attached to the driving force transmission gear by laser welding.

### Mode 51

A rotation angle detecting device comprising:
a case member which covers an object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor (coil) part to be not in contact with the magnetic field exciting conductor part, the excitation conductor part generating electric current corresponding to the rotational position of the object of detection of rotation by electromagnetic effect; and
a reception conductor part which is arranged on the case member and in which electric current corresponding to the electric current flowing through the excitation conductor part occurs, wherein:
   the excitation conductor part is arranged to rotate integrally with a rotating shaft of a rotating body, and
   the rotating shaft is attached to a housing formed of resin or ceramic.

### Mode 52

The rotation angle detecting device according to mode 51, wherein:
the excitation conductor part is arranged to rotate integrally with the rotating shaft of the rotating body, and
the rotating shaft is attached to a housing, and
part of the housing is formed of resin or ceramic so as to eliminate an electrical path between a power supply connector of the magnetic field exciting conductor part and an external member to which the rotation angle detecting device is attached.

### Mode 53

The rotation angle detecting device according to mode 51, wherein:
the excitation conductor part is arranged to rotate integrally with the rotating shaft of the rotating body, and
the rotating shaft is formed of resin or ceramic.

### Mode 54

The rotation angle detecting device according to mode 51, wherein:
the excitation conductor part is arranged to rotate integrally with the rotating shaft of the rotating body, and
part of the rotating shaft is formed of resin or ceramic.

### Mode 55

The rotation angle detecting device according to mode 51, wherein:
the excitation conductor part is arranged to rotate integrally with the rotating shaft of the rotating body, and
the rotating shaft is attached to a housing part via a bearing part.

### Mode 56

The rotation angle detecting device according to mode 55, wherein the bearing part is formed of resin or ceramic.

### Mode 57

The rotation angle detecting device according to mode 55, wherein part of the bearing part is formed of resin or ceramic.

### Mode 58

A rotation angle detecting device comprising:
a case member which covers an object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor (coil) part to be not in contact with the magnetic field exciting conductor part, the excitation conductor part generating electric current corresponding to the rotational position of the object of detection of rotation by electromagnetic effect; and
a reception conductor part which is arranged on the case member and in which electric current corresponding to the electric current flowing through the excitation conductor part occurs,
wherein an insulating layer for preventing electric discharge is formed between the excitation conductor part and the magnetic field exciting conductor part. Mode 59

The rotation angle detecting device according to mode 58, wherein the insulating layer is arranged on the excitation conductor part.

### Aspect 9

A rotation angle detecting device comprising:
a case member which is fixed to a body rotatably supporting an object of detection of rotation and covers the object of detection of rotation;
a magnetic field exciting conductor part which is arranged in a circular shape on the case member and generates a magnetic field when electric current is applied thereto;
an excitation conductor part which is fixed to the object of detection of rotation and arranged with a gap to the magnetic field exciting conductor part to be not in contact with the magnetic field exciting conductor part, the excitation conductor part generating electric current corresponding to the rotational position of the object of detection of rotation by electromagnetic effect;
a reception conductor part which is arranged on the case member and in which electric current corresponding to the electric current flowing through the excitation conductor part occurs;
a power supply connector which is provided on the case member having the magnetic field exciting conductor part; and
an insulating part which blocks the formation of a channel of discharge current between the power supply connector and the body when static electricity occurs.

### Aspect 13

The rotation angle detecting device according to aspect 9, wherein:
the excitation conductor part is arranged on a holder made of resin, and
the resin holder is fixed to a rotating shaft as the object of detection of rotation.

### Industrial Applicability

While the inductance-based noncontact rotation angle detecting devices in accordance with the present invention were installed in motor-driven throttle valve control devices for diesel engine vehicles in the above embodiments, the present invention is applicable also to motor-driven throttle valve control devices for gasoline engine vehicles.

The present invention is applicable to various kinds of rotation angle sensors, such as those for detecting the rotation angle of the accelerator pedal.

The present invention is applicable also to a rotation angle detecting device for detecting the rotation angle of an actuator for controlling the movable vanes of a turbocharger.

The present invention is applicable also to a rotation angle detecting device for detecting the rotation angle of a gear shift actuator of an automatic transmission.

The present invention is applicable also to a rotation angle detecting device for detecting the rotation angle of a 2WD/4WD switching actuator.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A motor-driven throttle valve control device having an inductance-based noncontact rotation angle detecting device, comprising:
a throttle body (6) in which an air intake passage and a motor case are formed;
a throttle shaft (3) which is rotatably supported by the throttle body (6);
a throttle gear (13) which is fixed to the throttle shaft (3);
a motor (20) which is provided in the motor case;
an output gear (22) which is attached to the motor (20);
a reducing gear mechanism which is provided between the output gear (22) and the throttle gear (13); and
a gear case which is fixed to the throttle body (6) to cover the reducing gear mechanism and the tip of the throttle shaft, wherein:
the inductance-based noncontact rotation angle detecting device includes:
a magnetic field exciting conductor part (3A) which is arranged in a circular shape on the gear case and generates a magnetic field when electric current is applied thereto;
an excitation conductor part (18) which is fixed to the tip of the throttle shaft (3) and arranged to face the magnetic field exciting conductor part (3A) via a gap to be not in contact with the magnetic field exciting conductor part (3A), the excitation conductor part (18) generating electric current corresponding to the rotational position of the throttle shaft (3) by electromagnetic effect; and
a reception conductor part which is arranged on the gear case and in which electric current corresponding to the electric current flowing through the excitation conductor part (18) occurs, and
wherein the gear case having the magnetic field exciting conductor part (3A) is equipped with a power supply connector so that electric power is supplied from the power supply connector to the magnetic field exciting conductor part (3A),
the motor-driven throttle valve control device comprises an insulating part which blocks the formation of a channel of discharge current from the power supply connector to the throttle body (6) via the magnetic field exciting conductor part (3A), the excitation conductor part (18) and the throttle shaft (3) when static electricity occurs, **characterized in that**
the excitation conductor part (18) comprises a resin-made holder (19) and a metallic inserter (31), the metallic inserter (31) is formed integrally with the resin-made holder (19), and the throttle shaft (3) is fixed to the metallic inserter (31) by press fit.

2. The motor-driven throttle valve control device having an inductance-based noncontact rotation angle detecting device according to claim 1, wherein:
the tip of the throttle shaft (3) is provided with the resin-made holder (19), and
the excitation conductor part (18) is provided on the resin-made holder (19) and faces the magnetic field exciting conductor part (3A) via a gap to be not in contact with the magnetic field exciting conductor part (3A).

3. The motor-driven throttle valve control device having an inductance-based noncontact rotation angle detecting device according to claim 2, wherein the excitation conductor part (18) is welded to the resin-made holder (19).

4. The motor-driven throttle valve control device having an inductance-based noncontact rotation angle detecting device according to claim 2, wherein the excitation conductor part (18) is formed by means of printing on the resin-made holder (19).

5. The motor-driven throttle valve control device having an inductance-based noncontact rotation angle detecting device according to claim 2, wherein the excitation conductor part (18) is formed on a printed circuit board which is attached to the resin-made holder (19) .

6. The motor-driven throttle valve control device having an inductance-based noncontact rotation angle detecting device according to claim 5, wherein the printed circuit board is formed integrally with the resin-made holder (19) by plastic molding.

7. The motor-driven throttle valve control device having an inductance-based noncontact rotation angle detecting device according to claim 5, wherein the printed circuit board is welded to the resin-made holder (19).

8. The motor-driven throttle valve control device having an inductance-based noncontact rotation angle detecting device according to claim 1, wherein:
the throttle gear (13) is formed of a resin gear, and
the excitation conductor part (18) is formed of a press-worked member, and
the excitation conductor part (18) formed of a press-worked member is joined to positioning holes of the resin molded gear.

9. A rotation angle detecting device comprising:
a case member which is fixed to a body rotatably supporting an object of detection of rotation and covers the object of detection of rotation;
a magnetic field exciting conductor part (3A) which is arranged in a circular shape on the case member and generates a magnetic field when electric current is applied thereto;
an excitation conductor part (18) which is fixed to the object of detection of rotation and arranged with a gap to the magnetic field exciting conductor part (3A) to be not in contact with the magnetic field exciting conductor part (3A), the excitation conductor part (18) generating electric current corresponding to the rotational position of the object of detection of rotation by electromagnetic effect;
a reception conductor part which is arranged on the case member and in which electric current corresponding to the electric current flowing through the excitation conductor part (18) occurs;
a power supply connector which is provided on the case member having the magnetic field exciting conductor part (3A); and
an insulating part which blocks the formation of a channel of discharge current between the power supply connector and the body when static electricity occurs, **characterized in that** the excitation conductor part (18) comprises a resin-made holder (19) and a metallic inserter (31), the metallic inserter (31) is formed integrally with the resin-made holder (19), and a throttle shaft (3) is fixed to the metallic inserter (31) by press fit.

10. The rotation angle detecting device according to claim 9, wherein the excitation conductor part (18) is arranged on a resin part which is formed integrally with a rotating shaft as the object of detection of rotation.

11. The rotation angle detecting device according to claim 10, wherein the excitation conductor part (18) is formed by press work and formed integrally with the resin part.

12. The rotation angle detecting device according to claim 10, wherein the excitation conductor part (18) is formed by means of printing on the resin part.

13. The rotation angle detecting device according to claim 9, wherein:
the excitation conductor part (18) is arranged on a holder made of resin, and
the resin-made holder (19) is fixed to a rotating shaft as the object of detection of rotation.

14. The rotation angle detecting device according to claim 13, wherein the excitation conductor part (18) is formed by press work and formed integrally with the resin made holder (19).

15. The rotation angle detecting device according to claim 13, wherein the excitation conductor part (18) is formed by means of printing on the resin-made holder (19).

## Patentansprüche

1. Motorgetriebene Drosselklappenventilsteuervorrichtung mit einer induktivitätbasierten, kontaktlosen Vorrichtung für die Drehwinkeldetektion, die Folgendes umfasst:
einen Drosselklappenkörper (6), in dem ein Lufteinlassdurchlass und ein Motorgehäuse gebildet sind;
eine Drosselklappenwelle (3), die von dem Drosselklappenkörper (6) drehbar getragen wird;
ein Drosselklappenzahnrad (13), das an der Drosselklappenwelle (3) befestigt ist;
einen Motor (20), der in dem Motorgehäuse vorgesehen ist;
ein Abtriebszahnrad (22), das an dem Motor (20) angebracht ist;
einen Untersetzungsgetriebemechanismus, der zwischen dem Abtriebszahnrad (22) und dem Drosselklappenzahnrad (13) vorgesehen ist, und
ein Getriebegehäuse, das an dem Drosselklappenkörper (6) befestigt ist, um den Untersetzungsgetriebemechanismus und die Spitze der Drosselklappenwelle (3) abzudecken, wobei:
die induktivitätbasierte, kontaktlose Vorrichtung für die Drehwinkeldetektion Folgendes aufweist:
ein ein Magnetfeld anregendes Leiterteil (3A), das kreisförmig auf dem Getriebegehäuse angeordnet ist und ein Magnetfeld erzeugt, wenn elektrischer Strom daran angelegt wird;
ein Anregungsleiterteil (18), das an der Spitze der Drosselklappenwelle (3) befestigt ist und so angeordnet ist, dass es dem ein Magnetfeld anregenden Leiterteil (3A) mit einem Spalt gegenüberliegt, um das ein Magnetfeld anregende Leiterteil (3A) nicht zu berühren, wobei das Anregungsleiterteil (18) aufgrund des elektromagnetischen Effekts entsprechend der Drehposition der Drosselklappenwelle (3) elektrischen Strom erzeugt und
ein Empfangsleiterteil, das auf dem Getriebegehäuse angeordnet ist und in dem elektrischer Strom entsprechend dem elektrischen Strom, der durch das Anregungsleiterteil (18) fließt, entsteht, und
wobei das Getriebegehäuse, das das ein Magnetfeld anregende Leiterteil (3A) besitzt, mit einem Leistungsversorgungsanschluss ausgestattet ist, so dass dem ein Magnetfeld anregenden Leiterteil (3A) über den Leistungsversorgungsanschluss elektrische Leistung zugeführt wird,
die motorgetriebene Drosselklappenventilsteuervorrichtung ein isolierendes Teil umfasst, das die Bildung eines Entladestromkanals von dem Leistungsversorgungsanschluss zu dem Drosselklappenkörper (6) über das ein Magnetfeld anregende Leiterteil (3A), das Anregungsleiterteil (18) und die Drosselklappenwelle (3) verhindert, wenn statische Elektrizität entsteht, und **dadurch gekennzeichnet ist, dass**
das Anregungsleiterteil (18) einen aus Harz hergestellten Halter (19) und einen metallischen Einsatz (31) umfasst, der metallische Einsatz (31) einteilig mit dem aus Harz hergestellten Halter (19) gebildet ist und die Drosselklappenwelle (3) durch Presspassung an dem metallischen Einsatz (31) befestigt ist.

2. Motorgetriebene Drosselklappenventilsteuervorrichtung, die eine induktivitätbasierte, kontaktlose Vorrichtung für die Drehwinkeldetektion nach Anspruch 1 besitzt, wobei:
die Spitze der Drosselklappenwelle (3) mit dem aus Harz hergestellten Halter (19) vorgesehen ist und
das Anregungsleiterteil (18) auf dem aus Harz hergestellten Halter (19) vorgesehen ist und dem ein Magnetfeld anregenden Leiterteil (3A) mit einem Spalt gegenüberliegt, um das ein Magnetfeld anregende Leiterteil (3A) nicht zu berühren.

3. Motorgetriebene Drosselklappenventilsteuervorrichtung, die eine induktivitätbasierte, kontaktlose Vorrichtung für die Drehwinkeldetektion nach Anspruch 2 besitzt, wobei das Anregungsleiterteil (18) auf den aus Harz hergestellten Halter (19) geschweißt ist.

4. Motorgetriebene Drosselklappenventilsteuervorrichtung, die eine induktivitätbasierte, kontaktlose Vorrichtung für die Drehwinkeldetektion nach Anspruch 2 besitzt, wobei das Anregungsleiterteil (18) mittels Drucken auf dem aus Harz hergestellten Halter (19) gebildet ist.

5. Motorgetriebene Drosselklappenveritilsteuervorrichtung, die eine induktivitätbasierte, kontaktlose Vorrichtung für die Drehwinkeldetektion nach Anspruch 2 besitzt, wobei das Anregungsleiterteil (18) auf einer gedruckten Leiterplatte, die auf dem aus Harz hergestellten Halter (19) angebracht ist, gebildet ist.

6. Motorgetriebene Drosselklappenventilsteuervorrichtung, die eine induktivitätbasierte, kontaktlose Vorrichtung für die Drehwinkeldetektion nach Anspruch 5 besitzt, wobei die gedruckte Leiterplatte durch das Formen von Kunststoff einteilig mit dem aus Harz hergestellten Halter (19) gebildet ist.

7. Motorgetriebene Drosselklappenventilsteuervorrichtung, die eine induktivitätbasierte, kontaktlose Vorrichtung für die Drehwinkeldetektion nach Anspruch 5 besitzt, wobei die gedruckte Leiterplatte auf den aus Harz hergestellten Halter (19) geschweißt ist.

8. Motorgetriebene Drosselklappenventilsteuervorrichtung, die eine induktivitätbasierte, kontaktlose Vorrichtung für die Drehwinkeldetektion nach Anspruch 1 besitzt, wobei:
das Drosselklappenzahnrad (13) aus einem Zahnrad aus Harz gebildet ist und
das Anregungsleiterteil (18) aus einem gepressten Element gebildet ist und
das aus einem gepressten Element gebildete Anregungsleiterteil (18) mit Positionierlöchern des aus Harz gebildeten Zahnrads verbunden ist.

9. Vorrichtung für die Drehwinkeldetektion, die Folgendes umfasst:
ein Gehäuseelement, das an einem Körper befestigt ist, der einen Gegenstand für die Detektion der Drehung drehbar trägt und den Gegenstand für die Detektion der Drehung abdeckt;
ein ein Magnetfeld anregendes Leiterteil (3A), das kreisförmig auf dem Gehäuseelement angeordnet ist und ein Magnetfeld erzeugt, wenn elektrischer Strom daran angelegt wird;
ein Anregungsleiterteil (18), das an dem Gegenstand für die Detektion der Drehung befestigt ist und mit einem Spalt zu dem ein Magnetfeld anregenden Leiterteil (3A) angeordnet ist, um das ein Magnetfeld anregende Leiterteil (3A) nicht zu berühren, wobei das Anregungsleiterteil (18) aufgrund des elektromagnetischen Effekts entsprechend der Drehposition des Gegenstands für die Detektion der Drehung elektrischen Strom erzeugt;
ein Empfangsleiterteil, das auf dem Gehäuseelement angeordnet ist und in dem elektrischer Strom entsprechend dem elektrischen Strom, der durch das Anregungsleiterteil (18) fließt, entsteht;
einen Leistungsversorgungsanschluss, der auf dem Gehäuseelement, das das ein Magnetfeld anregende Leiterteil (3A) besitzt, vorgesehen ist, und
ein isolierendes Teil, das die Bildung eines Entladestromkanals zwischen dem Leistungsversorgungsanschluss und dem Körper verhindert, wenn statische Elektrizität entsteht, **dadurch gekennzeichnet, dass** das Anregungsleiterteil (18) einen aus Harz hergestellten Halter (19) und einen metallischen Einsatz (31) umfasst, wobei der metallische Einsatz (31) einteilig mit dem aus Harz hergestellten Halter (19) gebildet ist und eine Drosselklappenwelle (3) durch Presspassung an dem metallischen Einsatz (31) befestigt ist.

10. Vorrichtung für die Drehwinkeldetektion nach Anspruch 9, wobei das Anregungsleiterteil (18) auf einem Harz-Teil angeordnet ist, das einteilig mit einer drehenden Welle als dem Gegenstand für die Detektion der Drehung gebildet ist.

11. Vorrichtung für die Drehwinkeldetektion nach Anspruch 10, wobei das Anregungsleiterteil (18) durch Pressen gebildet ist und einteilig mit dem Harz-Teil gebildet ist.

12. Vorrichtung für die Drehwinkeldetektion nach Anspruch 10, wobei das Anregungsleiterteil (18) mittels Drucken auf dem Harz-Teil gebildet ist.

13. Vorrichtung für die Drehwinkeldetektion nach Anspruch 9, wobei:
das Anregungsleiterteil (18) auf einem aus Harz hergestellten Halter (19) angeordnet ist und
der aus Harz hergestellte Halter (19) auf einer drehenden Welle als der Gegenstand für die Detektion der Drehung befestigt ist.

14. Vorrichtung für die Drehwinkeldetektion nach Anspruch 13, wobei das Anregungsleiterteil (18) durch Pressen gebildet ist und einteilig mit dem aus Harz hergestellten Halter (19) gebildet ist.

15. Vorrichtung für die Drehwinkeldetektion nach Anspruch 13, wobei das Anregungsleiterteil (18) mittels Drucken auf dem aus Harz hergestellten Halter (19) gebildet ist.

## Revendications

1. Dispositif de commande pour une vanne papillon motorisée ayant un dispositif de détection d'angle de rotation sans contact et à inductance, comprenant :
un corps de papillon (6) dans lequel sont formés un passage d'admission d'air et un boîtier de moteur ;
un axe de papillon (3) qui est supporté en rotation dans le corps de papillon (6) ;
un engrenage de papillon (13) qui est fixé sur l'axe de papillon (3) ;
un moteur (20) qui est prévu dans le boîtier de moteur ;
un engrenage de sortie (22) qui est attaché au moteur (20) ;
un mécanisme réducteur à engrenages prévus entre l'engrenage de sortie (22) et l'engrenage de papillon (13) ; et
un boîtier de mécanisme qui est fixé sur le corps de papillon (6) pour couvrir le mécanisme réducteur à engrenages et l'extrémité de l'axe de papillon, dans lequel :
le dispositif de détection d'angle de rotation sans contact à inductance inclut :
une partie conductrice d'excitation de champ magnétique (3A) qui est agencée sous une forme circulaire sur le boîtier de mécanisme et qui génère un champ magnétique lorsqu'un courant électrique lui est appliqué ;
une partie conductrice d'excitation (18) qui est fixée à l'extrémité de l'axe de papillon (3) et agencée en face de la partie conductrice d'excitation de champ magnétique (3A) via un intervalle pour ne pas être en contact avec la partie conductrice d'excitation de champ magnétique (3A), la partie conductrice d'excitation (18) générant un courant électrique correspondant à la position de rotation de l'axe de papillon (3) par effet électromagnétique ; et
une partie conductrice de réception qui est agencée sur le boîtier de mécanisme et dans lequel circule un courant électrique correspondant au courant électrique s'écoulant à travers la partie conductrice d'excitation (18), et
dans lequel le boîtier de mécanisme ayant la partie conductrice d'excitation de champ magnétique (3A) est équipé d'un connecteur d'alimentation de puissance de telle sorte qu'une puissance électrique est alimentée depuis le connecteur d'alimentation de puissance vers la partie conductrice d'excitation de champ magnétique (3A),
le dispositif de commande pour vanne papillon motorisée comprend une partie isolante qui bloque la formation d'un canal de courant de décharge depuis le connecteur d'alimentation de puissance vers le corps de papillon (6) via la partie conductrice d'excitation de champ magnétique (3A), la partie conductrice d'excitation (18) et l'axe de papillon (3) lorsqu'apparaît une électricité statique,
**caractérisé en ce que**
la partie conductrice d'excitation (18) comprend un support réalisé en résine (19) et un insert métallique (31), l'insert métallique (31) étant formé intégralement avec le support réalisé en résine (19), et l'axe de papillon (3) est fixé sur l'insert métallique (31) par engagement à la presse.

2. Dispositif de commande pour vanne papillon motorisée ayant un dispositif de détection d'angle de rotation sans contact à inductance selon la revendication 1, dans lequel :
l'extrémité de l'axe de papillon (3) est pourvu du support réalisé en résine (19), et
la partie conductrice d'excitation (18) est prévue sur le support réalisé en résine (19) et fait face à la partie conductrice d'excitation de champ magnétique (3A) via un intervalle pour ne pas être en contact avec la partie conductrice d'excitation de champ magnétique (3A).

3. Dispositif de commande pour vanne papillon motorisée ayant un dispositif de détection d'angle de rotation sans contact à inductance selon la revendication 2, dans lequel la partie conductrice d'excitation (18) est soudée sur le support réalisé en résine (19).

4. Dispositif de commande pour vanne papillon motorisée ayant un dispositif de détection d'angle de rotation sans contact à inductance selon la revendication 2, dans lequel la partie conductrice d'excitation est formée au moyen d'une impression sur le support réalisé en résine (19).

5. Dispositif de commande pour vanne papillon motorisée ayant un dispositif de détection d'angle de rotation sans contact inductance selon la revendication 2, dans lequel la partie conductrice d'excitation (18) est formée sur une carte à circuits imprimés qui est attachée sur le support réalisé en résine (19).

6. Dispositif de commande pour vanne papillon motorisée ayant un dispositif de détection d'angle de rotation sans contact à inductance selon la revendication 5, dans lequel la carte à circuits imprimés est formée intégralement avec le support réalisé en résine (19) par moulage à l'état plastique.

7. Dispositif de commande pour vanne papillon motorisée ayant un dispositif de détection d'angle de rotation sans contact à inductance selon la revendication 5, dans lequel la carte à circuits imprimés est soudée sur le support réalisé en résine (19).

8. Dispositif de commande pour vanne papillon motorisée ayant un dispositif de détection d'angle de rotation sans contact à inductance selon la revendication 1, dans lequel :
l'engrenage de papillon (13) est formé par un engrenage en résine, et
la partie conductrice d'excitation (18) est formée par un élément oeuvré à la presse, et
la partie conductrice d'excitation (18) formée par un élément oeuvré à la presse est réunie à des trous de positionnement de l'engrenage moulé en résine.

9. Dispositif de détection d'angle de rotation, comprenant :
un élément formant boîtier qui est fixé à un corps qui supporte en rotation un objet soumis à une détection de rotation et qui couvre l'objet soumis à la détection de rotation ;
une partie conductrice d'excitation de champ magnétique (3A) qui est agencée sous une forme circulaire sur l'élément formant boîtier et qui génère un champ magnétique quand un courant électrique lui est appliqué ;
une partie conductrice d'excitation (18) qui est fixée sur l'objet soumis à la détection de rotation et agencée avec un intervalle par rapport à la partie conductrice d'excitation de champ magnétique (3A) pour ne pas être en contact avec la partie conductrice d'excitation de champ magnétique (3A), la partie conductrice d'excitation (18) générant un courant électrique correspondant à la position de rotation de l'objet soumis à la détection de rotation par effet électromagnétique ;
une partie conductrice de réception qui est agencée sur l'élément formant boîtier est dans laquelle circule un courant électrique correspondant au courant électrique qui s'écoule à travers la partie conductrice d'excitation (18) ;
un connecteur d'alimentation de puissance qui est prévu sur l'élément formant boîtier ayant la partie conductrice d'excitation de champ magnétique (3 A) ; et
une partie d'isolation qui bloque la formation d'un canal de courant de décharge entre le connecteur d'alimentation de puissance et le corps lorsqu'apparaît une électricité statique,
**caractérisé en ce que** la partie conductrice d'excitation (18) comprend un support réalisé en résine (19) et un insert métallique (31), l'insert métallique (31) est formé intégralement avec le support réalisé en résine (19), et un axe de papillon (3) est fixé sur l'insert métallique (31) par engagement à la presse.

10. Dispositif de détection d'angle de rotation selon la revendication 9, dans lequel la partie conductrice d'excitation (18) est agencée sur une partie en résine qui est formée intégralement avec un axe de rotation qui est l'objet soumis à la détection de rotation.

11. Dispositif de détection d'angle de rotation selon la revendication 10, dans lequel la partie conductrice d'excitation (18) est formée par ouvrage à la presse et formée intégralement avec la partie en résine.

12. Dispositif de détection d'angle de rotation selon la revendication 10, dans lequel la partie conductrice d'excitation (18) est formée au moyen d'une impression sur la partie en résine.

13. Dispositif de détection d'angle de rotation selon la revendication 9, dans lequel :
la partie conductrice d'excitation (18) est agencée sur un support réalisé en résine, et
le support réalisé en résine (19) est fixé à un axe rotatif qui est l'objet soumis à la détection de rotation.

14. Dispositif de détection d'angle de rotation selon la revendication 13, dans lequel la partie conductrice d'excitation (18) est formée par ouvrage à la presse et formée intégralement avec le support réalisé en résine (19).

15. Dispositif de détection d'angle de rotation selon la revendication 13, dans lequel la partie conductrice d'excitation (18) est formée au moyen d'une impression sur le support réalisé en résine (19).
